Europäisches Patentamt

(19) European Patent Office

Office européen des brevets

(11) Publication number: **0 095 198**
**B2**

(12) **NEW EUROPEAN PATENT SPECIFICATION**

(45) Date of publication of the new patent specification:
**20.09.89**

(21) Application number: **83200553.2**

(22) Date of filing: **18.04.83**

(51) Int. Cl.⁴: **B 23 D 1/00// B23D21/14**

(54) **An apparatus for cutting through or trimming a pipe or can in a plane transverse to its longitudinal axis.**

(30) Priority: **27.04.82 NL 8201746**

(43) Date of publication of application:
**30.11.83 Bulletin 83/48**

(45) Publication of the grant of the patent:
**27.08.86 Bulletin 86/35**

(45) Mention of the opposition decision:
**20.09.89 Bulletin 89/38**

(84) Designated contracting states:
**AT BE CH DE FR GB IT LI LU NL SE**

(56) References cited:
**DE–A– 2 218 396**
**DE–A– 2 401 474**
**DE–A– 2 548 472**
**DE–C– 750 476**
**DE–C– 1 096 316**
**FR–A– 2 298 395**
**GB–A– 1 268 968**
**US–A– 2 526 163**
**US–A– 3 359 841**

(73) Proprietor: **Thomassen & Drijver-Verblifa N.V.**
**Zutphenseweg 51 P.O. Box 103**
**NL-7400 GB Deventer (NL)**

(72) Inventor: **Post, Willem Pieter**
**Burg. Arriensweg 7**
**NL-7431 BL Diepenveen (NL)**

(74) Representative: **Bruin, Cornelis Willem et al**
**OCTROOIBUREAU ARNOLD & SIEDSMA P.O. Box 18558**
**NL-2502 EN The Hague (NL)**

EP 0 095 198 B2

## Description

The invention relates to an apparatus for cutting through or trimming a pipe or can, e. g. a welded, a soldered or a seamless deep drawn piece of tubing or a welded, a soldered or a seamless deep drawn tin, in a plane extending transversely to the longitudinal axis thereof by means of two cooperating shearing members of which, during operation, the cutting edges are relatively moved in said plane one past the other whilst enclosing together an acute angle, the first one of said shearing members being supported by a mandrel, said first shearing member being mounted for rotation about an axis extending in the same direction as the longitudinal axis of the mandrel and having extending along its outer circumference a radially outwardly pointing cutting edge in the shape of a closed curved line, the mandrel being mounted for rotation about an axis extending in the same direction as its longitudinal axis as well as for movement in a direction at right angles with said axis and the outer radial dimensions of said first shearing member and the mandrel being such as to allow the pipe or can to be cut through or trimmed to be sleeved over them, the second one of said shearing members having a radially inwardly pointing cutting edge and an active curved guideface and being formed on or attached to a supporting member surrounding, in operation, the mandrel, the inner radial dimensions of said second shearing member and said supporting member being such as to allow passage of the pipe or can to be cut through or trimmed and the apparatus comprising in addition driving means for putting the shearing members into relative movement and thereby into cooperation.

A cutting or trimming apparatus of this type has been disclosed in the GB-A-1.268.968. In this known apparatus the second or outer shearing member is fixed to a stationary supporting member, the first or inner shearing member is mounted for rotation on the mandrel, the latter does not rotate about its longitudinal axis in respect of the second shearing member, when it is moved with the first shearing member past the stationary second shearing member and the tubular body to be cut through or trimmed has to be rotated about its longitudinal axis in respect of the mandrel and the shearing members. In this apparatus the shearing operation exerts a great tangential force on the tubular body sleeved over the mandrel and the first shearing member, so that said body must be held firmly by the means to rotate it. Owing thereto the known apparatus is actually only adapted to deal with cans, consequently with tubular bodies having a bottom which can be satisfactorily held by a suction pad or clamped by other means.

The object of the invention is to provide a cutting or trimming apparatus which is of relatively simple construction and is adapted to operate with great speed and to deal both with cans and with tubular bodies which are open at both ends, that means with pipes or other pieces of tubing. According to the invention the object aimed at is achieved in that the mandrel is mounted for rotation about its longitudinal axis on a holder; the first shearing member is formed on or attached to the mandrel, so that, in operation, it is forced to rotate together with the mandrel about the longitudinal axis of the latter; the second shearing member is a complete ring or bushing having the cutting edge extending along its entire inner circumference; the supporting member of the second shearing member is an annular or tubular member supported by and so mounted on the mandrel as to be, in respect of the mandrel and the first shearing member, locked against axial movement and against rotation but movable, if necessary against spring force, in all radial directions; the guideface of the supporting member of the second shearing member is a truly circular ring-shaped area formed on the outer circumferential surface of the annular or tubular member and adapted to cooperate with a guideway; and the driving means are adapted to so rotate the mandrel and to so effect the relative movement of the mandrel and the guideway as to force, during operation, the annular or tubular member to roll with its guideface in contact with the guideway and thereby to force successively all points of the cutting edge of the second shearing member to move radially towards and from the axis of rotation of the mandrel past the cutting edge of the first shearing member.

One of the advantages of the apparatus according to the invention is that irrespective of whether or not the shape of the transverse section of the pipe or can to be cut through or trimmed is circular, elliptical, oval or differently curved, the shearing is effected by rolling the second shearing member with its truly circular peripheral guideface along the guideway. Since a rolling motion, especially when it is constant, is a very smooth motion, the apparatus is able to operate with great speed. Another advantage is that the two shearing members are locked against relative axial movement as is known in itself from DE-A-2.401.474 relating to an apparatus which is similar to and has some of the disadvantages of that disclosed in GB-A-1.268.968. This locking against axial movement ensures that the cutting edges of the shearing members are always held in their correct relative axial positions and the required small axial clearance, the so called cutting gap, is maintained between the cutting edges with certainty, whereby the danger that said edges come accidentally into contact with one another and damage each other is prevented. Moreover no time is required, as in the known apparatus referred to hereabove, for moving the shearing members into their relative positions ready for the cutting operation, whereby also the allowed maximum speed of the apparatus is increased. Due to the fact that the area surrounded by the cutting edge of the second or outer shearing member could principally be equal to but, in order to make the insertion of the tubular body to be dealt with easily possible, will generally be made a little bit larger than the outer cross sectional area of said body, the angle enclosed by the shearing edges in each cutting point is very small, so that the cutting or shearing action is almost radial and owing thereto the tangential force exerted on the body during cutting or trimming is very small. Consequently, said body needs not to be held against rotation in respect of the shearing members and tubular bodies open at both ends, e. g. pipes, as well as tubular bodies closed at one end, e. g. cans, can be cut through or trimmed in the apparatus without the requirement of special holding means.

It is observed that a cutting or trimming apparatus of the type, in which each one of the shearing members has a shearing edge in the shape of a closed line and the two shearing edges are relatively moved more or less excentrically, has been disclosed in the US-A-2.526.163. However, in this known apparatus the second or outer shearing member is moved with its cutting edge in a stationary plane and successively in all directions transversely to the longitudinal axis of the can to be trimmed by three separate cylinder-piston systems after the first or inner shearing member has been moved in the direction of the said axis from a position of rest into its working position. For moving the two shearing members relatively a complicated driving mechanism and very accurately operating adjusting means are required. Therefore, this apparatus is costly and its speed is rather slow.

Should the mandrel and its holder be mounted for rotation about a main axis which is parallel with the longitudinal axis of the mandrel, as already has been proposed in the above mentioned GB-A-1.268.968, it appears to be advantageous, if in the apparatus according to the invention the guideway is provided on and forms part of the inner circumference of a nonrotary annular guiding member surrounding the main axis and is concentric with said axis and the remaining part of the inner circumference of the annular guiding member is so spaced from the main axis, as to allow the cutting edges of the two shearing members to be positioned one concentrically with the other in order to leave between them an annular gap to receive the pipe or can to be cut through or trimmed. Just as the known apparatus, this construction has the advantage over a possible apparatus, in which the guideway is straight or extend along a non-closed curve, so that the two shearing members and their accessories have to be mounted for reciprocation parallel with said guideway, that the tubular bodies to be handled are more smoothly moved and owing thereto can be moved past the loading place, the cutting trajectory and the discharge station with much greater speed.

Further advantages are obtained when in the last mentioned apparatus a construction is used, in which attached to the mandrel is a toothed wheel which is coaxial with the mandrel and has a pitch circle equal to the circular guideface of the annular or tubular member provided with the second shearing member, a stationary toothed ring with interior gear meshing with said toothed wheel is provided and said ring is concentric with the main axis and has a pitch circle of which the radius is equal to that of the guideway, so that during rotation of the mandrel about the main axis the mandrel is rotated about its own axis and, during the shearing operation, the annular or tubular member provided with the second shearing member is rolled with its guideface in contact with the guideway of the guiding member. This further development of the apparatus avoids that either the annular or tubular member with the second shearing member slides on the guideway or a relative rotation of said annular or tubular member and the mandrel occurs. Both this sliding movement and this relative rotation would affect the cutting operation.

For the radially movable support of the tubular or annular member carrying the second shearing member a construction is recommended, in which formed on or attached to the mandrel is a bushing which has a collar and concentrically surrounds the mandrel with clearance to form a gap adapted to receive the pipe or can to be cut through or trimmed, said collar having on each side a radial shoulder; the annular or tubular member provided with the second shearing member has axially opposite each shoulder of said collar a radially inwards directed shoulder; and provided between each shoulder of the collar and the axially opposite shoulder of said annular or tubular member is a ring of balls which allow the relative movement of the two shearing members in a plane perpendicular to the longitudinal axis of the mandrel but keep the shearing members with their cutting edges in axial direction in the relative places required for the shearing operation. In the thus constructed apparatus the usually provided relatively axially movable stripper element for the removal of the trimmed pipe or can and the cut-off marginal portion thereof is advantageously provided in the gap between the mandrel and the collar bushing.

The invention allows the simultaneous trimming of both ends of a pipe or the division of a pipe in three pieces of tubing. To that end the apparatus will have to be provided with two pairs of cooperating shearing members and their accessories which are coaxially mounted in the stationary supporting frame of the apparatus one opposite the other for movement towards and from one another.

The invention will be elucidated with the aid of the drawing of an embodiment of the invention. In the drawing:

Figs. 1, 2 and 3 show in three different conditions an axial sectional view of the part of an apparatus constructed in accordance with the invention which is essential to understand the invention,

Fig. 4 illustrates on a larger scale an axial sectional view of a detail of the apparatus shown in Figs. 1, 2 and 3,

Fig. 5 is a diagrammatic cross sectional view of the mandrel, the shearing members and a portion of the guiding member of the apparatus,

Fig. 6 shows partly an axial sectional view, partly an elevational view of an apparatus provided with a plurality of pairs of coaxial mandrels with shearing members illustrated in Figs. 1, 2 and 3, and

Fig. 7 illustrates on a smaller scale a diagrammatic transverse view of a part of the apparatus shown in Fig. 6.

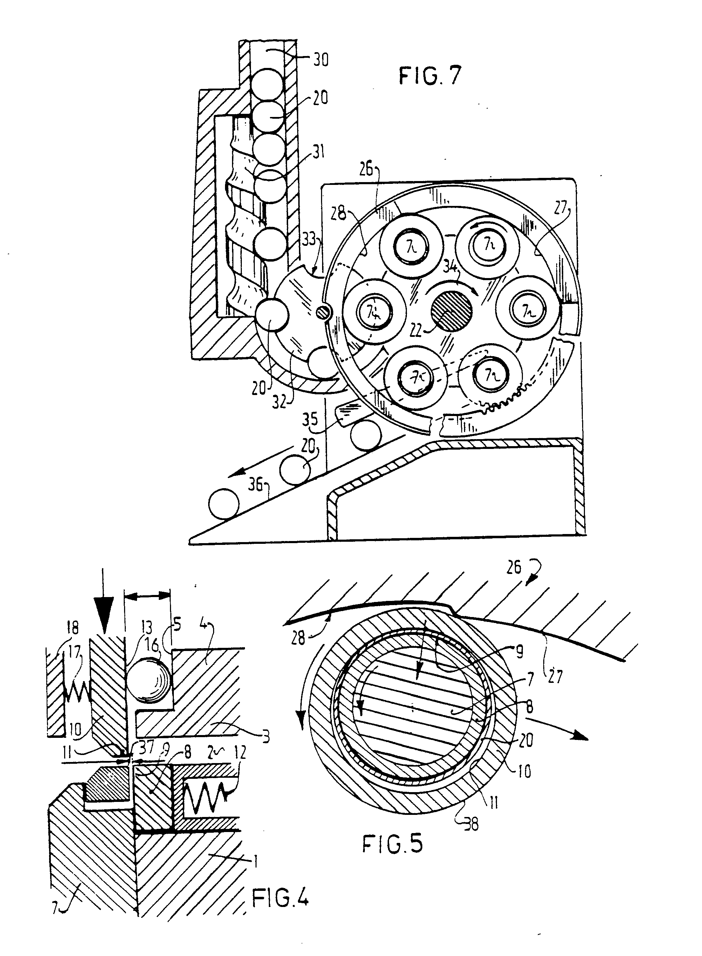

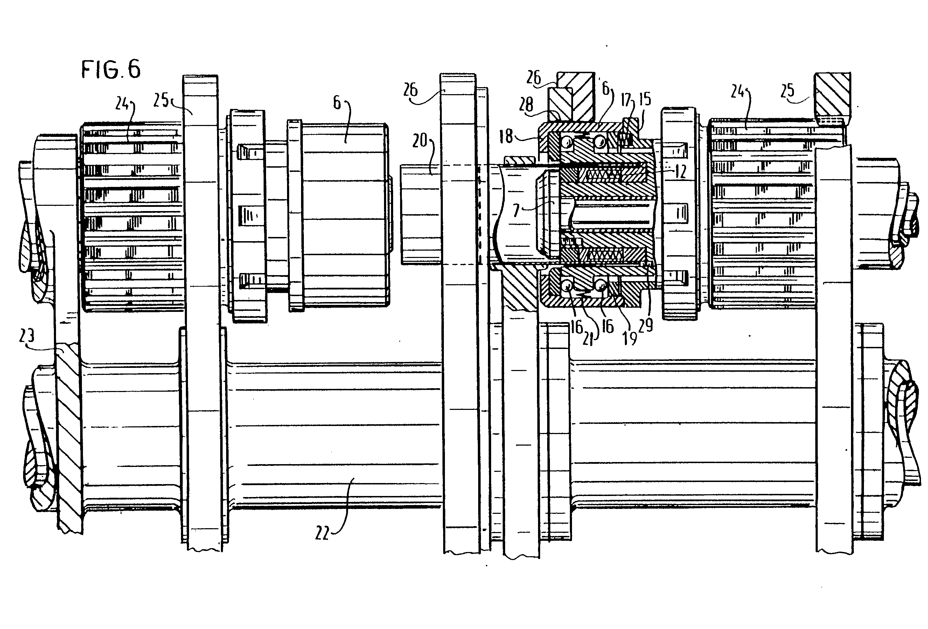

In all figures of the drawing 1 is a mandrel mounted for rotation about its longitudinal axis. At some distance for forming a cylindrical gap 2 the mandrel is surrounded by a bushing 3 which is provided with a collar 4 and formed on the mandrel. Said collar has on each side an exactly radial shoulder 5. The mandrel 1 with its collar-bushing 3, 4, 5 is surrounded by an outer bushing 6. Near its free end portion or head 7 the mandrel carries a first shearing member in the shape of a ring 8, of which the outer edge facing said head forms the cutting edge 9 of said shearing member and has a diameter which is slightly larger than that of the head 7 and is equal to that of the rest of the mandrel. The outer bushing 6 has in its cavity a second shearing member in the shape of a ring 10, of which the inner edge remote from the head 7 of the mandrel forms a cutting edge 11 adapted to be brought into cooperation with the cutting edge 9 of the ring 8 (see particularly Figs. 4 and 5). The ring 8 is pressed against the head 7 of the mandrel 1 by springs 12 (only shown in Figs. 4 and 6), so that the place of the cutting edge 9 is exactly defined in axial direction.

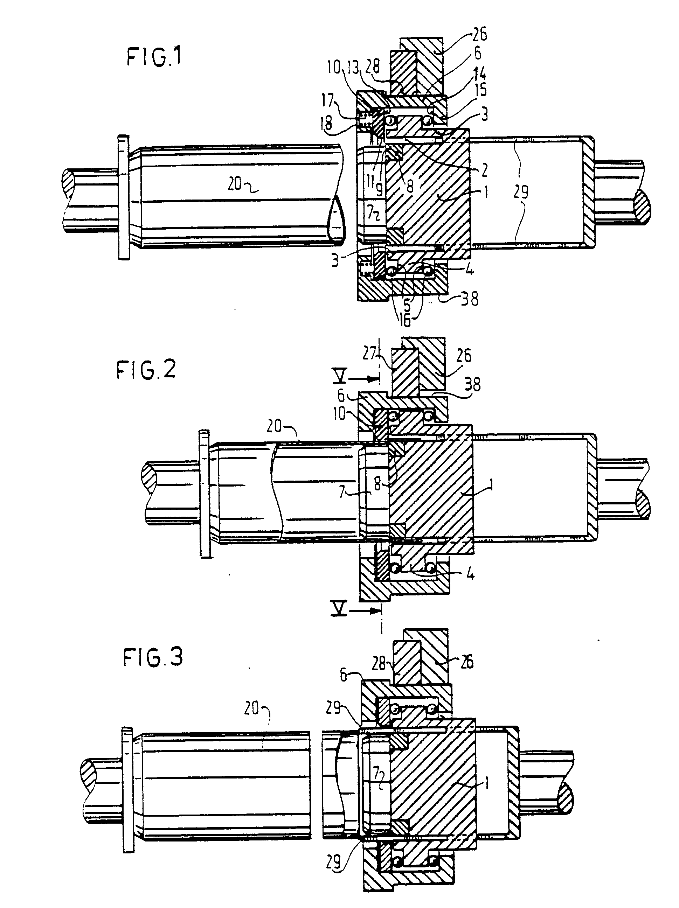

Provided between one shoulder 5 of the collar 4 of the bushing 3 and the inwardly extending side face 13 of the ring 10 and provided between the other shoulder 5 of the collar 4 and the inwardly extending side face 14 of an inner flange 15 of the outer bushing 6 are circular rows of balls 16 which allow movement of the ring 10 with its cutting edge 11 in all radial directions in respect of the mandrel 1 and the ring 8 with its cutting edge 9. However, the balls 16 provided between the ring 10 and the collar 4 also determine the correct axial position of the cutting edge 11 in respect of the cutting edge 9. They ensure that a small axial clearance, the so called cutting-gap 37, is maintained between the cutting edges 9 and 11. This cutting-gap prevents that the cutting edges come into contact with one another and thereby damage each other. Owing thereto the working life of the shearing members is considerably extended. In Figs. 1, 2, 3 and 4 the ring 10 is pressed against the balls 16 by springs 17 and in Fig. 6 the ring 10 lies against the inner flange 18 of the bushing 6 and the springs 17 are provided on the other side of the collar 4 between the inner flange 15 and a ring 19 lying against the balls 16.

Also these springs ensure that the ring 10 with its cutting edge 11 is pressed against the balls and is thereby held in the correct axial position in respect of the ring 8 with its cutting edge 9.

In Figs. 1, 2 and 3 a can 20 to be trimmed is moved in axial direction on the mandrel into the gap 2, as soon as the ring 10 with its cutting edge 11 has been moved by radial springs 21 (Fig. 6) into a position, in which an annular gap corresponding with the gap 2 is left between said cutting edge 11 and the cutting edge 9 of the ring 8 for letting the can through. Thereafter the ring 10 is forced by external control with its cutting edge 11 point after point in a direction towards and from the axis of the mandrel past the cutting edge 9 of the ring 8, the whilst that the mandrel and the outer bushing are rotated about the axis of the mandrel, so that the can 20 is cut through along its circumference. This movement of the ring 10 with cutting edge 11 means that said ring is moved with the centre of its cutting edge along a circle surrounding concentrically the centre of the cutting edge 9 of the ring 8.

How the control of the ring 10 with cutting edge 11 is achieved in a simple way appears from Figs. 6 and 7. In the apparatus illustrated in these figures parallel mandrels and accessories are supported with their axes extending parallel with a main shaft 22 and lying on a cylinder surface which is concentric with said main shaft by a disc-shaped holder 23 attached to the main shaft. The main shaft itself is mounted for rotation, so that the mandrels are adapted to be moved parallel to themselves in a circular path around the main shaft.

Each mandrel 1 and accessories is coaxially fastened to a toothed wheel 24 which meshes with a stationary toothed ring 25 with interior gear, so that, when the main shaft 22 with the holder 23 is rotated, the mandrels are rotated about their axes. At the same time the outer bushing 6 with the ring 10 with cutting edge 11 of each mandrel is rolled with the truly circular outer guideface 38 in contact with an active guideway 27 of a non-rotary guiding member 26.

The latter consists of two parts concentric with the main shaft 22, of which the active part or guideway 27 has a smaller radius and the inactive part 28 has a larger radius (see Fig. 5). If the outer bushing 6 with the second shearing member 10, 11 moves in the inactive part 28 of the guiding member 26 it adjusts itself with its cutting edge 11 substantially concentrically with the cutting edge 9 of the ring 8, so that a gap for letting a pipe or can through is left between the two cutting edges. However, if the outer guideface 38 of the bushing 6 comes into contact with the active guideway 27 of the guiding member 26, it is moved whilst rolling in contact with said part 27, with its cutting edge 11 point after point past the cutting edge 9 of the ring 8 and, consequently a pipe or can inserted into the gap 2 and extending between the rings 8 and 10 is transversely cut through.

The apparatus shown in Fig. 6 is so constructed, as to ensure that the pitch circle of the toothed wheel 24 is equal to the circular guideface 38 of the outer bushing 6 cooperating with the active guideway of the guiding member 26. Furthermore, the radius of the pitch circle of the toothed ring 25 is coaxial with and equal to the radius of the active guideway 27 of the guiding member 26. The result of this construction is that, during the shearing operation, the outer bushing 6 is truly rolling in contact with the guiding member and has no tendency to rotate in respect of the mandrel.

In Fig. 6 each mandrel with accessories and its toothed wheel are mounted for axial movement on the holder 23. This makes it possible that a pipe or can is placed in lateral direction in front of a mandrel which is then axially retracted from the working position and thereupon the mandrel is inserted into the pipe or can (see the left hand side of the double apparatus shown in Fig. 6). For the ejection of the cut through or trimmed pipe or can and the cut-off portions thereof out of the gap 2 between the mandrel 1 and the collar-bushing 3, 4 axially movable stripper bars 29 are provided, which, when the mandrel is axially stationary (see Fig. 1, 2, 3) are adapted to be axially inserted into the gap, but, when the mandrel itself is mounted for axial movement, may be mounted in a fixed position, since in that case they will penetrate the gas 2 as a result of the axial movement of the mandrel.

The particular feature of the apparatus shown in Fig. 6 is that it is a double apparatus, as already said, which means that provided coaxially opposite to each mandrel with accessories is a second mandrel with accessories. This apparatus is adapted, as will be obvious, to cut pipes or pieces of tubing through in two axially spaced apart places at the same time. In this way it is, for instance, possible to trim the end portions of pipes or to cut simultaneously three pieces of tubing of desired, say equal, lengths from a preshaped piece of tubing. It can only operate effectively with mandrels and accessories mounted for axial movement towards and from one another, since the pipes or pieces of tubing can only be laterally supplied to and discharged from said apparatus.

Fig. 7 illustrates diagrammatically, how the pipes or cans may be supplied one after the other through a shaft 30, by a screw conveyor 31 and by a drum 32 provided with pockets 33 laterally in front of a mandrel 1 with accessories or between two coaxial mandrels with accessories (Fig. 6) and thereafter may be rotated in a circular path about the main shaft 22 by the mandrel(s) in the?din of the arrow 34, so that they are first moved along the inactive part 28 of the guiding member 26 in order to allow the axially retracted mandrel(s) to be inserted into the respective pipe or can, thereupon moved along the active guideway 27 of the guiding member 26, in order to have the pipe or can cut through or trimmed in one or more places, and finally moved again along the inactive part 28 of the guiding member 26, in order to allow, after the mandrel(s) has (have) been retracted, the respected pipe portions or can portions to be discharged along the path 36 from the apparatus by means of the discharge member 35.

## Claims

1. An apparatus for cutting through or trimming a pipe or can (20), e. g. a welded, a soldered or a seamless deep drawn piece of tubing or a welded, a soldered or a seamless deep drawn tin, in a plane extending transversely to the longitudinal axis thereof by means of two cooperating shearing members (8, 9 and 10, 11) of which, during operation, the cutting edges (9, 11) are relatively moved in said plane one past the other whilst enclosing together an acute angle, the first one of said shearing members (8, 9) being supported by a mandrel (1), said first shearing member being mounted for rotation about an axis extending in the same direction as the longitudinal axis of the mandrel (1) and having extending along its outer circumference a radially outwardly pointing cutting edge (9) in the shape of a closed curved line, the mandrel (1) being mounted for rotation about an axis extending in the same direction as its longitudinal axis as well as for movement in a direction at right angles with said axis and the outer radial dimensions of said first shearing member (8, 9) and the mandrel (1) being such as to allow the pipe or can (20) to be cut through or trimmed to be sleeved over them, the second one (10, 11) of said shearing members (8, 9 and 10, 11) having a radially inwardly pointing cutting edge (11) and an active curved guideface (38) and being formed on or attached to a supporting member (6) surrounding, in operation, the mandrel (1), the inner radial dimensions of said second shearing member (10, 11) and said supporting member (6) being such as to allow passage of the pipe or can (20) to be cut through or trimmed, and the apparatus comprising in addition driving means for putting the shearing members (8, 9 and 10, 11) into relative movement and thereby into cooperation, characterized in that the mandrel (1) is mounted for rotation about its longitudinal axis on a holder (23) ; the first shearing member (8, 9) is formed on or attached to the mandrel (1), so that, in operation, it is forced to rotate together with the mandrel (1) about the longitudinal axis of the latter ; the second shearing member (10, 11) is a complete ring or bushing (10) having the cutting edge (11) extending along its entire inner circumference ; the supporting member of the second shearing member (10, 11) is an annular or tubular member (6) supported by and so mounted on the mandrel (1) as to be, in respect of the mandrel (1) and the first shearing member (8, 9), locked against axial movement and against rotation but movable, if necessary against spring force (21), in all radial directions ; the guideface of the supporting member of the second shearing member (10, 11) is a truly circular ring-shaped area (38) formed on the outer circumferential surface of the annular or tubular member (6) and adapted to cooperate with a guideway (27) ; and the driving means are adapted to so rotate the mandrel (1) and to so effect the relative movement of the mandrel (1) and the guideway (27) as to force, during operation, the annular or tubular member (6) to roll with its guideface (38) in contact with the guideway (27) and thereby to force successively all points of the cutting edge (11) of the second shearing member (10, 11) to move radially towards and from the axis of rotation of the mandrel (1) past the cutting edge (9) of the first shearing member (8).

2. An apparatus according to claim 1, in which the mandrel (1) and its holder (23) are mounted for rotation about a main axis which is parallel with the longitudinal axis of the mandrel, characterized in that the guideway (27) is provided on and forms part of the inner circumference of a nonrotary annular guiding member (26) surrounding the main axis and is concentric with said axis and the remaining part (28) of the inner circumference of the annular guiding member (26) is so spaced from the main axis, as to allow the cutting edges (9, 11) of the two shearing members (8, 10) to be positioned one concentrically with the other in order to leave between them an annular gap (2) to receive the pipe or can (20) to be cut through or trimmed.

3. An apparatus according to claim 2, characterized in that attached to the mandrel (1) is a toothed wheel (24) which is coaxial with the mandrel (1) and has a pitch circle equal to the circular guideface (38) of the annular or tubular member (6) provided with the second shearing (10, 11) member, a stationary toothed ring (25) with interior gear meshing with said toothed wheel (24) is provided and said ring (25) is concentric with the main axis and has a pitch circle of which the radius is equal to that of the guideway (27), so that during rotation of the mandrel (1) about the main axis the mandrel is rotated about its own axis, and, during the shearing operation, the annular or tubular member (6) provided with the second shearing member (10, 11) is rolled with its guideface· (38) in contact with the guideway (27) of the guiding member (26).

4. An apparatus according to claim 2 or 3, characterized in that formed on or attached to the mandrel (1) is a bushing (3) which has a collar (4) and concentrically surrounds the mandrel with clearance to form a gap (2) adapted to receive the pipe or the can (20) to be cut through or trimmed, said collar (4) having on each side a radial shoulder (5) ; the annular or tubular member (6) provided with the second shearing member (10, 11) has axially opposite each shoulder (5) of said collar (4) a radially inwards directed shoulder (13, 14) ; and provided between each shoulder (5) of the collar (4) and the axially opposite shoulder (13, 14) of said annular or tubular member (6) is a ring of balls (16) which allow the relative movement of the two shearing members (8, 9 ; 10, 11) in a plane perpendicular to the longitudinal axis of the mandrel (1) but keep the shearing members with their cutting edges (9, 11) in axial direction in the relative places required for the shearing operation.

5. An apparatus according to claim 4, having a relatively axially movable stripper element (29) for the removal of the trimmed pipe or can (20) and the cut-off marginal portion thereof, characterized in that said stripper element (29) is provided in the gap (2).

6. An apparatus according to claim 1-5 for the simultaneous trimming of the ends of a pipe (20) or for dividing a pipe (20) in three pieces of tubing, characterized in the provision of two pairs of cooperating shearing members (8, 9 ; 10, 11) and their accessories which are coaxially mounted in the stationary supporting frame of the apparatus one opposite the other for movement towards and from one another.

**Patentansprüche**

1. Vorrichtung zum Durchschneiden oder Trimmen einer Röhre oder Dose (20), beispielsweise einem geschweißten, gelöteten oder nahtlos tiefgezogenen Röhrenstück oder einer geschweißten, gelöteten oder nahtlos tiefgezogenen Büchse in einer zu deren Längsachse rechtwinkligen Ebene mittels zweier zusammenwirkender Abscherglieder (8, 9 und 10, 11), deren Schneidkanten (9, 11) im Betrieb in der genannten Ebene relativ zueinander eine entlang der anderen bewegt werden, während sie einen spitzen Winkel zueinander einschließen, wobei das erste der Abscherglieder (8, 9) von einer Spindel (1) gehalten und drehbar um eine Achse montiert ist, die sich in derselben Richtung erstreckt wie die Längsachse der Spindel (1) und entlang seines Außenumfanges eine radial nach außen weisende Schneidkante (9) in der Form einer geschlossenen Kurvenlinie aufweist, die Spindel (1) sowohl drehbar um eine Achse montiert ist, die sich in derselben Richtung erstreckt wie ihre Längsachse, als auch zur Bewegung in einer rechtwinkligen Richtung zu dieser Achse, die radialen Außendimensionen des ersten Abschergliedes (8, 9) und der Spindel (1) derart bemessen sind, daß die durchzuschneidende oder zu trimmende Röhre oder Dose (20) hülsenartig über sie schiebbar sind das zweite (10, 11) der Abscherglieder (8, 9 und 10, 11) eine radial nach innen weisende Schneidkante (11) und eine aktive, gekrümmte Führungsfläche (38) aufweist und an einem Halteteil (6) angeformt oder daran befestigt ist, das im Betrieb die Spindel (1) umgibt, die radialen Innendimensionen des zweiten Abschergliedes (10, 11) und des Halteteils (6) derart bemessen sind, daß sie ein Durchführen der durchzuschneidenden oder zu trimmenden Röhre oder Dose (20) erlauben und die Vorrichtung zusätzlich einen Antrieb enthält, der die Abscherglieder (8, 9 und 10, 11) in relative Bewegung zueinander und dadurch in Aktion versetzt, gekennzeichnet durch folgende Merkmale : die Spindel (1) ist um ihre Längsachse drehbar an einem Halter (23) montiert, das erste Abscherglied ist an die Spindel (1) angeformt oder daran befestigt, so daß es im Betrieb zwangsweise zusammen mit der Spindel (1) um deren Längsachse rotiert, das zweite Abscherglied (10, 11) ist ein vollständiger Ring oder Hülse (10) mit einer sich entlang deren ganzem inneren Umfang erstreckenden Schneidkante (11), das Halteteil des zweiten Abschergliedes (10, 11) ist ein ring- oder röhrenförmiges Teil (6), das so von der Spindel (1) gehalten und an ihr befestigt ist, daß es bezüglich der Spindel (1) und dem ersten Abscherglied (8, 9) gegen axiale Bewegung und gegen Rotation gesperrt, jedoch nötigenfalls gegen Federkraft (21), in allen Radialrichtungen beweglich ist, die Führungsfläche des Halteteils für das zweite Abscherglied (10, 11) ist ein echter kreisringförmiger Bereich (38), der an die äußere Umfangsfläche des ring- oder röhrenförmigen Teiles (6) angeformt und für ein Zusammenwirken mit der Führungsbahn (27) ausgebildet ist und der Antrieb ist derart ausgebildet, daß er die Spindel (1) in Rotation versetzt und daß er eine relative Bewegung der Spindel (1) und der Führungsbahn (27) derart bewirkt, daß während des Betriebes das ring- oder röhrenförmige Teil (26) dazu gezwungen wird, zusammen mit seiner Führungsfläche (38) in Kontakt mit der Führungsbahn (27) zu rotieren, wodurch sich aufeinanderfolgend alle Punkte der Schneidkante (11) des zweiten Abschergliedes (10, 11) gezwungenermaßen radial auf die Rotationsachse der Spindel (1) zu und wieder davon weg entlang der Schneidkante (9) des ersten Abschergliedes (8) bewegen.

2. Vorrichtung nach Anspruch 1, bei der die Spindel (1) und ihr Halter (23) drehbar auf einer Hauptachse befestigt sind, die parallel zur Längsachse der Spindel liegt, dadurch gekennzeichnet, daß die Führungsbahn (27) am Innenumfang eines nicht drehbaren, ringförmigen, die Hauptachse umgebenden Führungsteiles (26) angeordnet ist, einen Teil davon bildet und konzentrisch zur besagten Achse liegt, daß der verbleibende Teil (28) des Innenumfangs des ringförmigen Führungsteiles (26) so von der Hauptachse beabstandet ist, daß es den Schneidkanten (9, 11) der beiden Abscherglieder (8, 10) eine derart konzentrische Position zueinander erlaubt, daß zwischen ihnen ein ringförmiger Spalt (2) verbleibt, der die durchzuschneidende oder zu trimmende Röhre oder Dose (20) aufnimmt.

3. Vorrichtung nach Anspruch 2, dadurch gekennzeichnet, daß an der Spindel (1) ein Zahnrad (24) angebracht ist, das koaxial zur Spindel (1) liegt und einen Grundkreis (pitch circle) aufweist, der gleich ist der kreisförmigen Führungsfläche (38) des mit dem zweiten Abscherglied (10, 11) versehenen, ring- oder röhrenförmigen Teiles (6), daß ein stationärer Zahnring (25) mit innenliegendem Zahnkranz in Eingriff mit dem Zahnrad (24) steht, konzentrisch mit der Hauptachse ist und einen Grundkreis (pitch circle) aufweist, dessen Radius gleich ist dem der Führungsbahn (27), so daß während der Rotation der Spindel (1) um die Hauptachse die Spindel um ihre eigene Achse in Rotation versetzt wird und daß das mit dem zweiten Abscherglied (10, 11) versehene, ring- oder kreisförmige Teil (6) während der Abscherung mit seiner Führungsfläche (38) in Kontakt mit der Führungsbahn (27) des Führungsteiles (26) gedreht wird.

4. Vorrichtung nach Anspruch 2 oder 3, dadurch gekennzeichnet, daß eine Hülse (3) mit einem Kragen (4) an die Spindel (1) angeformt oder daran befestigt ist und diese konzentrisch umgibt, wobei dazwischen ein Freiraum zur Ausbildung eines Spaltes (2) verbleibt, der zur Aufnahme der durchzuschneidenden oder zu trimmenden Röhre oder Dose (20) bestimmt ist, wobei der Kragen (4) an jeder Seite eine radiale Schulter (5) aufweist, daß das mit dem zweiten Abscherglied (10, 11) versehene ring- oder röhrenförmige Teil (6) axial gegenüber jeder Schulter (5) des Kragens (4) radial nach innen weisende Absätze (13, 14) aufweist, und daß zwischen jeder Schulter (5) des Kragens (4) und der axial gegenüberliegenden Absätze (13, 14) des ring- oder röhrenförmigen Teiles (6) ein Ring von Kugeln (16) vorgesehen ist, der eine relative Bewegung der beiden Abscherglieder (8, 9, 10, 11) in einer Ebene senkrecht zur Längsachse der Spindel (1) erlaubt, die Abscherglieder mit ihren Schneidkanten (9, 11) jedoch in axialer Richtung in ihrer relativen Position zueinander hält, die für die Abscherung erforderlich ist.

5. Vorrichtung nach Anspruch 4 mit einem relativ axial bewegbaren Abzugelement (29) zur Entfernung der getrimmten Röhre oder Dose (20) und deren abgeschnittenen Randteils dadurch gekennzeichnet, daß das Abzugelement (29) im Spalt (2) angeordnet ist.

6. Vorrichtung nach den Ansprüchen 1 bis 5, zum gleichzeitigen Trimmen der Enden einer Röhre (20) oder zum Teilen einer Röhre (20) in drei Rohrstücke, dadurch gekennzeichnet, daß zwei Paare von zusammenwirkenden Abschergliedern (8, 9, 10, 11) und ihrer zugehörigen Teile vorgesehen sind, welche koaxial einander gegenüber an einem stationären Halterahmen aufeinanderzu und voneinanderweg bewegbar befestigt sind.

**Revendications**

1. Appareil pour couper ou rogner des tubes ou des boîtes cylindriques (20) — tels que des éléments de tuyauterie soudés, brasés ou étirées sans soudure, ou des boîtes à conserves soudées, brasées ou étirées sans soudure — dans un plan perpendiculaire à leur axe longitudinal au moyen de deux éléments associés de cisaillement (8, 9 et 10, 11) dont, lors du fonctionnement, les tranchants (9, 11) sont successivement déplacés l'un par rapport à l'autre dans ledit plan tout en formant entre eux un angle aigu, où le premier desdits éléments de cisaillement (8, 9) est supporté par un mandrin (1), ledit premier élément de cisaillement étant monté rotatif autour d'un axe s'étendant dans la même direction que l'axe longitudinal du mandrin (1) et présentant un tranchant (9) en forme de courbe fermée s'étendant le long de sa périphérie externe et tourné radialement vers l'extérieur, le mandrin (1) étant monté rotatif autour d'un axe et les dimensions radiales extérieures dudit premier élément de cisaillement (8, 9) et du mandrin (1) étant prévues pour permettre au tube ou à la boîte métallique (20) à couper ou tronçonner d'être emmanché(e) sur eux, où le second (10, 11) desdits éléments de cisaillement (8, 9 et 10, 11) présente un tranchant (11) tourné radialement vers l'intérieur et une face de guidage active courbe (38), et est formé ou fixé sur un élément de support (6) qui entoure le mandrin (1) lors du fonctionnement, les dimensions radiales intérieures dudit second élément de cisaillement (10, 11) et dudit élément de support (6) étant prévues pour permettre le passage du tube ou de la boîte métallique (20) à couper ou rogner, et où l'appareil comprend en outre des moyens d'entraînement pour le déplacement relatif et donc la coopération des éléments de cisaillement (8, 9 et 10, 11), caractérisé en ce que le mandrin (1) est monté rotatif autour de son axe longitudinal sur un support (23) ; le premier élément de cisaillement (8, 9) est formé ou fixé sur le mandrin (1) de telle sorte que, lors du fonctionnement, il est forcé à tourner conjointement avec le mandrin (1) autour de l'axe longitudinal de ce dernier ; le second élément de cisaillement (10, 11) est une bague ou un anneau fermé (10), sur la totalité de la périphérie interne duquel s'étend le tranchant (11) ; l'élément de support du second élément de cisaillement (10, 11) est un élément annulaire ou tubulaire (6) supporté par le mandrin (1) et monté sur ce dernier de manière à être, par rapport au mandrin (1) et au premier élément de cisaillement (8, 9), bloqué en déplacement axial et en rotation tout en étant, si nécessaire à l'encontre d'une force de ressort (21), mobile dans toutes les directions radiales ; la face de guidage de l'élément de support du second élément de cisaillement (10, 11) est une zone annulaire (38) parfaitement circulaire formée sur la surface périphérique externe de l'élément annulaire ou tubulaire (6) et prévue pour coopérer avec un guide (27) ; et les moyens d'entraînement sont prévus pour faire tourner le mandrin (1) et engendrer le mouvement relatif entre le mandrin (1) et le guide (27) de manière à, lors du fonctionnement, forcer la face de guidage (38) de l'élément annulaire ou tubulaire (6) à rouler en contact avec le guide (27), et à forcer ainsi successivement tous les points du tranchant (11) du second élément de cisaillement (10, 11) à se rapprocher et s'éloigner radialement de l'axe de rotation du mandrin (1), au-delà du tranchant (9) du premier élément de cisaillement (8).

2. Appareil selon la revendication 1, où le mandrin (1) et son support (23) sont montés rotatifs autour d'un axe principal qui est parallèle à l'axe longitudinal du mandrin, caractérisé en ce que le guide (27) est prévu sur et fait partie de la périphérie interne d'un élément de guidage annulaire non rotatif (26) entourant l'axe principal, en ce que le guide (27) et l'axe principal sont concentriques, et en ce que la partie restante (28) de la périphérie interne de l'élément de guidage annulaire (26) se trouve à une distance de l'axe principal permettant aux tranchants (9, 11) des deux éléments de cisaillements (8, 10) d'être positionnés concentriquement de façon à laisser entre eux un espace libre annulaire (2) pour recevoir le tube ou la boîte cylindrique (20) à couper ou rogner.

3. Appareil selon la revendication 2, caractérisé en ce qu'une roue dentée (24) est fixée sur le mandrin (1), en ce que la roue dentée (24) et le mandrin (1) sont coaxiaux, en ce que le cercle primitif de la roue dentée (24) est égal à la face de guidage circulaire (38) de l'élément annulaire ou tubulaire (6) pourvu du second élément de cisaillement (10, 11), en ce qu'il est prévu un anneau denté fixe (25) à denture intérieure s'engrenant avec ladite roue dentée (24), en ce que ledit anneau (25) et l'axe principal sont concentriques, en ce que le rayon du cercle primitif de l'anneau (25) est égal à celui du guide (27), de sorte que lors de la rotation du mandrin (1) autour de l'axe principal, le mandrin tourne autour de son propre axe, et en ce que lors de l'opération de cisaillement, la face de guidage (38) de l'élément annulaire ou tubulaire (6) pourvu du second élément de cisaillement (10, 11) roule en contact avec le guide (27) de l'élément de guidage (26).

4. Appareil selon la revendication 2 ou 3, caractérisé en ce qu'une douille (3) est formée ou fixée sur le mandrin (1), laquelle est munie d'un collier (4) et entoure concentriquement et avec jeu le mandrin de façon à laisser un espace libre (2) prévu pour recevoir le tube ou la boîte cylindrique (20) à couper ou rogner, le collier (4) présentant de chaque côté un épaulement radial (5) ; en ce que l'élément annulaire ou tubulaire (6) pourvu du second élément de cisaillement (10, 11) présente, axialement à l'opposé de chaque épaulement (5) dudit collier (4), un épaulement (13, 14) dirigé radialement vers l'intérieur ; et en ce qu'il est prévu entre chaque épaulement (5) du collier (4) et l'épaulement axialement opposé (13, 14) dudit élément annulaire ou tubulaire (6) une couronne de billes (16) qui permet le déplacement relatif des deux éléments de cisaillement (8, 9 ; 10, 11) dans un plan perpendiculaire à l'axe longitudinal du mandrin (1) tout en maintenant axialement les tranchants (9, 11) des éléments de cisaillement à leurs places relatives requises pour l'opération de cisaillement.

5. Appareil selon la revendication 4, muni d'un élément d'extraction (29) à mobilité axiale relative, qui est destiné à la dépose du tube ou de la boîte métallique (20) rogné(e) et de la partie marginale rognée de ce ou cette dernière, caractérisé en ce que ledit élément d'extraction (29) est prévu dans l'espace libre (2).

6. Appareil selon l'une des revendications 1 à 5, destiné à rogner simultanément les extrémités d'un tube (20) ou à diviser un tube (20) en trois éléments de tuyauterie, caractérisé en ce qu'il est prévu deux paires d'éléments de cisaillement associés (8, 9 ; 10, 11) munies de leurs accessoires, qui sont montées coaxialement en vis-à-vis dans le bâti de support fixe de l'appareil de manière à pouvoir être rapprochées et éloignées l'une de l'autre.

FIG.1

FIG.2

FIG.3

FIG. 7

FIG. 5

FIG. 4

2

FIG.6

EP 0 095 198 B2